# EUROPEAN PATENT APPLICATION

(11) **EP 2 547 114 A2**
(43) Date of publication of application: **16.01.2013**
(21) Application number: 12173036.0
(22) Date of filing: 21.06.2012
(51) Int. Cl.: H04N 13/04

(54) **Display apparatus and method for displaying 3D image thereon**

(30) Priority: 14.07.2011 KR 20110069829
(71) Applicant: Samsung Electronics Co., Ltd., Suwon-si, Gyeonggi-do, 443-742 (KR)
(72) Inventor: Kim, Ji-won, Seoul (KR); Park, Ji-won, Seoul (KR); Seo, Je-hwan, Daegu (KR)
(74) Representative: Clark, David James

(57) **Abstract**

A display apparatus, a three-dimensional (3D) image output method, and a method of controlling 3D glasses are provided. The display apparatus includes a display unit which alternately outputs a left eye image and a right eye image at predetermined intervals; a driving signal output unit which outputs a driving signal to alternately open left eye glasses and right eye glasses of 3D glasses within a single vertical sync section; and a control unit which controls the driving signal output unit to additionally open the left eye glasses or the right eye glasses within the predetermined intervals.

## Description

### BACKGROUND

### 1. Field

Methods and apparatuses consistent with exemplary embodiments relate to a display apparatus and a method for displaying a three-dimensional (3D) image thereof, and more particularly, to a display apparatus which displays a 3D image and a method for displaying a 3D image thereof.

### 2. Description of the Prior Art

Efforts to develop a 3D display apparatus have accelerated for a more realistic watching experience. Therefore, a 3D image signal, which was previously mainly watched in a theater, may now be watched in a household by using a general display apparatus such as a television (TV).

A 3D display apparatus is classified into a glasses type and a non-glasses type according to glasses are required to view a displayed 3D image. The non-glasses type refers to a method of converting an image signal into a multifocal image and outputting the multifocal image so that a user feels a 3D effect without glasses.

The glasses type refers to a method by which if a display apparatus alternately outputs left and right eye images, a user recognizes the left eye image with the left eye and the right eye image with the right eye and thus feels a 3D effect due to a displacement between the left and right eye images.

The glasses type may be classified into a shutter glasses method and a polarized method.

The shutter glasses method refers to a method by which shutters of glasses are switched so that a left eye glass is turned on when a left eye image is output and a right eye glass is turned on when a right eye image is output. The polarized method refers to a method by which a polarized direction of light output from a display apparatus alternately shifts at 0° and 90° for a user who wears glasses having different polarized directions.

The shutter glasses method adopts glasses that are more expensive than the polarized method, but is mainly adopted in a household TV.

The shutter glasses method may cause flickering due to discrepancy between a frequency of an external light source (i.e., external light from sources not relevant to a displayed 3D image) and a driving frequency of 3D glasses. In particular, if the driving frequency of 3D glasses is low, such a problem is more likely to occur, disrupting a user's viewing.

Therefore, a method of effectively preventing perceived flickering due to the influence of external light is required.

### SUMMARY

An aim of exemplary embodiments relates to a display apparatus for preventing or reducing perceived flickering due to external light and a method for displaying a 3D image thereof.

According to an aspect of an exemplary embodiment, there is provided an image processing apparatus including: an output unit which alternately outputs a left eye image and a right eye image at predetermined intervals; a driving signal output unit which outputs a driving signal to alternately open left eye glasses and right eye glasses of 3D glasses within a single vertical sync period; and a control unit which controls the driving signal output unit to additionally open at least one of the left eye glasses and the right eye glasses within the intervals.

The vertical sync period may include a left eye image display section and a right eye image display section, and the left eye image and the right eye image may be respectively displayed in part of the left eye image display section and part of the right eye image display section having the intervals.

The driving signal output unit may output a driving signal to open the left eye glasses in the left eye image display section and to open the right eye glasses in the right eye image display section, and the control unit may control the driving signal output unit to additionally open the left eye glasses at intervals after the left eye image is output and to additionally open the right eye glasses at intervals after the right eye image is output. Suitably, the intervals after the left eye image is output comprise one interval of additional opening of the left eye glasses per vertical sync period. In this context, "one" may be interpreted as "only one". Suitably , the intervals after the right eye image is output comprise one interval of additional opening of the right eye glasses per vertical sync period. In this context "one" may be interpreted as "only one". Suitably, the driving signal output unit may output a driving signal to open, during the intervals after the left eye image is output and after the right eye image is output, both of the left eye glasses and right eye glasses.

The driving signal output unit may output a driving signal to open the left eye glasses while the left eye image is output in the left eye image display section and to open the right eye glasses while the right eye image is output in the right eye image display section, and the control unit may control the driving signal output unit to additionally open the left eye glasses at intervals before the left eye image is output and to additionally open the right eye glasses at intervals before the right eye image is output.. Suitably, the intervals before the left eye image is output comprise one interval of additional opening of the left eye glasses per vertical sync period. In this context, "one" may be interpreted as "only one". Suitably , the intervals before the right eye image is output comprise one interval of additional opening of the right eye glasses per vertical sync period. In this context "one" may be interpreted as "only one". Suitably, the driving signal output unit may output a driving signal to open, during the intervals before the left eye image is output and before the right eye image is output, both of the left eye glasses and right eye glasses.

The control unit may additionally open the left eye glasses and the right eye glasses a predetermined number of times so that the 3D glasses are operated at a frequency which is N times an external frequency (where N is a natural number). The external frequency may suitably comprise the frequency of an external light source, not linked to the operation of the image processing apparatus. The external frequency may suitably be that of an electrical mains supply, for example 50Hz or 60Hz. In example embodiments N may comprise 2 or 3.

According to an aspect of another exemplary embodiment, there is provided a 3D image output method, the method including: alternately outputting a left eye image and a right eye image at predetermined intervals; and transmitting, to the 3D glasses, a driving signal to alternately open left eye glasses and right eye glasses of 3D glasses within a single vertical sync period and to additionally open at least one of the left eye glasses and the right eye glasses within the intervals.

The vertical sync period may include a left eye image display section and a right eye image display section, and the left eye image and the right eye image may be respectively displayed in part of the left eye image display section and part of the right eye image display section having the intervals.

The driving signal may be a driving signal to open the left eye glasses in the left eye image display section and to open the right eye glasses in the right eye image display section, and to additionally open the left eye glasses at intervals after the left eye image is output and to additionally open the right eye glasses at intervals after the right eye image is output.

The driving signal may be a driving signal to open the left eye glasses while the left eye image is output in the left eye image display section and to open the right eye glasses while the right eye image is output in the right eye image display section, and to additionally open the left eye glasses at intervals before the left eye image is output and to additionally open the right eye glasses at intervals before the right eye image is output.

The driving signal may be a driving signal to additionally open the left eye glasses and the right eye glasses a predetermined number of times so that the 3D glasses are operated at a frequency which is N times an external frequency (where N is a natural number).

Suitably, the method may comprise steps performed as described in relation to operation of the apparatus above.

According to an aspect of another exemplary embodiment, there is provided a 3D glasses driving method, the method including: alternately opening left eye glasses and right eye glasses of 3D glasses within a vertical sync period where a left eye image and a right eye image are alternately output at predetermined intervals; and additionally opening at least one of the left eye glasses and the right eye glasses within the intervals.

The vertical sync period may include a left eye image display section and a right eye image display section, and the left eye image and the right eye image may be respectively displayed in part of the left eye image display section and the right eye image display section having the intervals.

The left eye glasses may be opened in the left eye image display section and additionally opened at intervals after the left eye image is output, and the right eye glasses may be opened in the right eye image display section and additionally opened at intervals after the right eye image is output.

The left eye glasses may be opened at intervals before the left eye image is output and may be opened while the left eye image is output in the left eye image display section, and the right eye glasses may be opened at intervals before the right eye image is output and may be opened while the left eye image is output in the right eye image display section

The 3D glasses may be operated at a frequency which is N times an external frequency (where N is a natural number).

According to an aspect of another exemplary embodiment, there is provided a three-dimensional (3D) glasses driving apparatus, the apparatus including: a driving signal output unit which outputs a driving signal to alternately open left eye glasses and right eye glasses of 3D glasses within a single vertical sync period during which a single left eye image and a single right eye image are displayed; and a control unit which controls the driving signal output unit to additionally open at least one of the left eye glasses and the right eye glasses.

Accordingly, a user may experience less interference while viewing a 3D image since flickering due to external light is prevented.

### BRIEF DESCRIPTION OF THE DRAWINGS

The above and/or other aspects of the present disclosure will be more apparent by describing certain exemplary embodiments with reference to the accompanying drawings, in which:
FIG. 1 is a view illustrating a 3D image providing system according to an exemplary embodiment;
FIG. 2 is a block diagram illustrating a structure of a 3D display apparatus according to an exemplary embodiment;
FIG. 3 is a block diagram explaining a detailed structure of a display apparatus according to an exemplary embodiment;
FIG. 4 is a block diagram illustrating a structure of 3D glasses according to an exemplary embodiment;
FIG. 5 illustrates timing diagrams to explain an operation of 3D glasses according to an image output from a display apparatus according to an exemplary embodiment;
FIG. 6 illustrates timing diagrams to explain an operation of 3D glasses according to an image output from a display apparatus according to another exemplary embodiment;
FIG. 7 illustrates timing diagrams to explain an operation of 3D glasses according to an image output from a display apparatus according to another exemplary embodiment; and
FIG. 8 is a flowchart to explain a method for displaying a 3D image according to an exemplary embodiment.

### DETAILED DESCRIPTION OF EXEMPLARY EMBODIMENTS

Certain exemplary embodiments are described in higher detail below with reference to the accompanying drawings.

In the following description, like drawing reference numerals are used for the like elements, even in different drawings. The matters defined in the description, such as detailed constructions and elements, are provided to assist in a comprehensive understanding of exemplary embodiments. However, exemplary embodiments can be practiced without those specifically defined matters. Also, well-known functions or constructions are not described in detail since they would obscure the application with unnecessary detail. Expressions such as "at least one of," when preceding a list of elements, modify the entire list of elements and do not modify the individual elements of the list. The term "unit" as used herein may mean a hardware component such as a processor, memory, or circuit, and/or a software component which is executed by or stored in a hardware component such as a processor or memory.

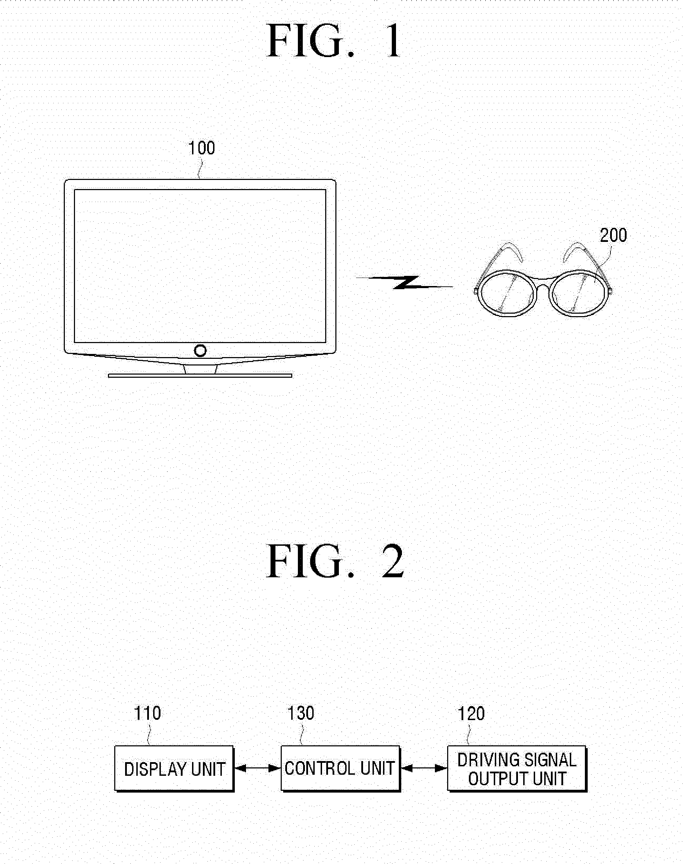

FIG. 1 is a view illustrating a three-dimensional (3D) image providing system according to an exemplary embodiment. As illustrated in FIG. 1, the 3D image providing system includes a 3D display apparatus 100 which displays a 3D image on a screen and 3D glasses 200 which are used to watch the 3D image.

The display apparatus 100 outputs a left eye image frame and a right eye image frame alternately at predetermined intervals according to a 3D image signal.

In addition, the display apparatus 100 opens left eye glasses and right eye glasses of the 3D glasses 200 alternately within a vertical sync period (i.e., section), and generates a driving sync output unit which additionally opens left eye glasses and right eye glasses of the 3D glasses 200 within an interval between the left eye image frame and the right eye image frame.

The 3D glasses 200 are realized as active type shutter glasses and receive a driving signal output unit from the display apparatus 100 to selectively open and close left and right eye glasses. Accordingly, the 3D glasses 200 open left and right eye glasses alternately within a single vertical sync period, and additionally open the left eye glasses and the right eye glasses within an interval between a left eye image frame and a right eye image frame.

As a result, the display apparatus may prevent flickering occurring due to a discrepancy between a frequency of an external light source (such as a fluorescent lamp) and a driving frequency of the 3D glasses.

The 3D image providing system according to the present exemplary embodiment may further include a camera (not shown) which generates the 3D image.

The camera is a kind of photographing apparatus which generates a 3D image and generates a left eye image which is captured to be provided to a left eye of a user and a right eye image which is captured to be provided to a right eye of the user. The 3D image includes left and right eye images which are alternately provided to the left and right eyes of the user so as to generate a 3D effect due to a binocular disparity.

For this purpose, the camera may include a left eye camera or lens which is to generate the left eye image and a right eye camera or lens which is to generate the right eye image. Also, a distance between the left and right eye cameras or lenses may be determined in consideration of a distance between both eyes of a human.

The camera transmits the captured left and right eye images to the display apparatus 100. In particular, the left and right eye images are transmitted from the camera to the display apparatus 100 in a format in which a frame includes only one of the left and right eye images or in a format in which a frame includes both the left and right eye images.

The camera may determine one of various 3D image formats, generate a 3D image according to the determined 3D image format, and transmit the 3D image to the display apparatus 100.

While the present exemplary embodiment is described with reference to a 3D camera generating the 3D image, it is understood that another exemplary embodiment is not limited thereto. For example, according to another exemplary embodiment, a two-dimensional (2D) image may be converted by the display apparatus 100 or another device into a 3D image using, for example, a predetermined algorithm that assigns depth values to various objects and a background of the 2D image.

FIG. 2 is a block diagram illustrating a structure of a display apparatus 100 according to an exemplary embodiment. According to FIG. 2, the display apparatus 100 includes a display unit 110, a driving signal output unit 120, and a control unit 130.

The display unit 110 outputs a left eye image and a right eye image alternately and provides the output images to a user. Specifically, the display unit 110 may output a left eye image and a right eye image alternately at predetermined intervals within a single vertical sync period.

Herein, the single vertical sync period refers to a section between vertical driving signal output units extracted from a 3D image signal and may include a left eye image display section and a right eye image display section.

Accordingly, the display unit 110 may create an interval between a left eye image and a right eye image by displaying the left eye image and the right eye image only in parts of the left eye image display section and the right eye image display section, respectively. Furthermore, a backlight unit to illuminate the display unit 110 may, although not necessarily, be controlled to be off during the interval between the displayed left eye and right eye images.

The display unit 110 may be realized as a liquid crystal display (LCD) panel, and may include detailed structures such as a panel driver (not shown), a display panel unit (not shown), a backlight driver (not shown), and a backlight emitter (not shown), albeit not limited thereto. For example, according to one or more other exemplary embodiments, the display unit 110 may be realized as a plasma display, an organic light emitting diode display, a cathode ray tube display, etc.

The driving signal output unit 120 may output a driving signal which opens left eye glasses and right eye glasses of the 3D glasses 200 alternately.

Specifically, the driving signal output unit 120 may generate a driving signal which opens left eye glasses and right eye glasses of the 3D glasses 200 (for instance, a shutter glasses method) alternately according to display timings of a left eye image and a right eye image within a single vertical sync period.

More specifically, the driving signal output unit 120 may output a driving signal which opens left eye glasses in a left eye image display section and right eye glasses in a right eye image display section. Alternatively, the driving signal output unit 120 may output a driving signal which opens left eye glasses of the 3D glasses 200 while a left eye image is output in the left eye image display section and right eye glasses of the 3D glasses 200 while a right eye image is output in the right eye image display section.

The control unit 130 controls overall operations of the display apparatus 100 according to a user command or a predetermined option.

In particular, the control unit 130 may control the driving signal output unit 120 to additionally open left eye glasses or right eye glasses of the 3D glasses 200. That is, the control unit 130 may control the driving signal output unit 120 to output a driving signal which additionally or continuously opens left eye glasses and right eye glasses of the 3D glasses 200, regardless of display timings of a left eye image and a right eye image.

Specifically, the control unit 130 may control the driving signal output unit 120 to additionally open left eye glasses of the 3D glasses 200 at an interval after a left eye image is output and to additionally open right eye glasses of the 3D glasses 200 at an interval after a right eye image is output. Alternatively, the control unit 130 may control the driving signal output unit 120 to additionally open left eye glasses of the 3D glasses 200 at an interval before a left eye image is output in a left eye image display section and to additionally open right eye glasses of the 3D glasses 200 at an interval before a right eye image is output in a right eye image display section.

Herein, as described above, the interval refers to a section which is created as a left eye image is displayed in part of a left eye image display section and a right eye image is displayed in part of a right eye image display section, that is, the interval refers to a section between a displayed left eye image and a displayed right eye image.

As described above, when additionally opening left eye glasses and right eye glasses, the control unit 130 may additionally open left eye glasses or right eye glasses of the 3D glasses 200 a predetermined number of times such that the 3D glasses 200 are operated in a frequency which is N times (where N is a natural number) of an external frequency. According to one or more exemplary embodiments, the operating frequency of the 3D glasses 200 may be adjusted or controlled by a user input.

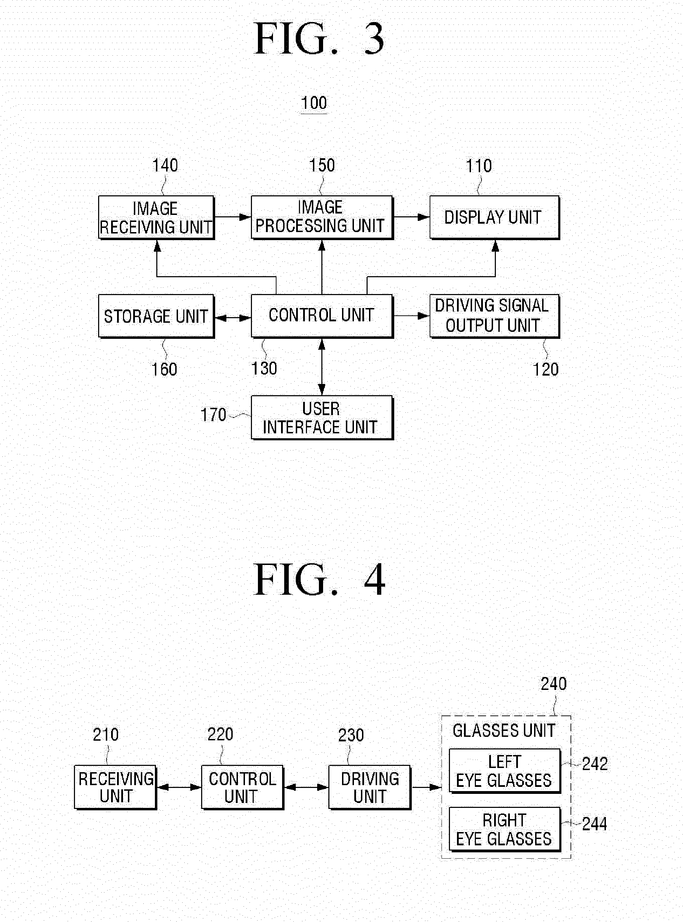

FIG. 3 is a block diagram explaining a detailed structure of a display apparatus according to an exemplary embodiment. Referring to FIG. 3, the display apparatus 100 includes the display unit, the driving signal output unit 120, the control unit 130, an image receiving unit 140, an image processing unit 150, a storage unit 160, and a user interface unit 170. A redundant description of the components which have been already explained with respect to FIG. 2 is omitted herein.

The image receiving unit 140 receives a 2D or 3D image signal from a broadcasting station, a satellite, via the Internet, etc., by wire or wirelessly and demodulates the 2D or 3D image signal. The image receiver 110 may also be connected to an external device, such as a camera or the like, to receive a 3D image. The external device may be connected to the 3D display apparatus 100 wirelessly or by wire through an interface such as S-Video, a component interface, a composite interface, D-Sub, a digital visual interface (DVI), a high definition multimedia interface (HDMI), or the like.

The 3D image refers to an image which includes at least one frame, i.e., an image in which each of frames includes left and right eye images or each of frames includes a left eye image or a right eye image. In other words, the 3D image is an image which is generated according to one of various 3D image formats.

Therefore, the 3D image received through the image receiving unit 140 may be generated according to various formats, for example, may be generated according to a format complying with one of a top-bottom method, a side-by-side method, a horizontal interleave method, a vertical interleave method, a checker board method, and a sequential frame method.

The image receiving unit 140 transmits the received 2D or 3D image to the image processing unit 150.

The image processing unit 150 performs signal processing, such as video decoding, format analyzing, video scaling, etc., and an addition operation of a graphical user interface (GUI) with respect to the 2D or 3D image received through the image receiving unit 140.

In particular, the image processing unit 150 generates left and right eye images corresponding to a size (e.g., 1920*1080) of a screen by using a format of the 2D or 3D image received through the image receiving unit 140.

For example, if the format of the 3D image is a format complying with the top-bottom method, the side-by-side method, the horizontal interleave method, the vertical interleave method, the checker board method, or the sequential frame method, the image processing unit 150 extracts left and right eye images from each image frame and scales or interpolates the extracted left and right eye images to generate left and right eye images which are to be provided to a user.

If the format of the 3D image complies with a general frame sequence method, the image processing unit 150 prepares to extract a left or right eye image from each frame and provide the extracted left or right eye image to the user.

Input information regarding the format of the 3D image may be included or may not be included in the 3D image.

For example, if the input information regarding the format of the 3D image is included in the 3D image, the image processing unit 150 analyzes the 3D image to extract the information from the 3D image and processes the 3D image according to the extracted information. If the information regarding the format of the 3D image is not included in the 3D image, the image processing unit 150 processes the 3D image according to a format input from the user or a preset format.

The image processing unit 150 extracts a vertical sync signal, time-divides the processed left and right eye images, and alternately transmits the time-divided left and right eye images to the display unit 110. For example, the image processing unit 150 transmits the left and right eye images to the display unit 110 in time orders of "left eye image L1 -> right eye image R1 -> left eye image L2 -> right eye image R2 ->...," though it is understood that another exemplary embodiment is not limited thereto. For example, according to another exemplary embodiment, a right eye image corresponding to a single 3D image frame may be output prior to a left eye image corresponding to the single 3D image frame.

Herein, the image processing unit 150 may transmit a left eye image and a right eye image alternately to the display unit 110 at predetermined intervals within a single vertical sync period.

The display unit 110 outputs a left eye image and a right eye image alternately and provides the output images to a user. Specifically, the display unit 110 may output a left eye image and a right eye image alternately at predetermined intervals within a single vertical sync period. Accordingly, a left eye image may be displayed in part of a left eye image display section and a right eye image may be displayed in part of a right eye image display section and thus, a predetermined interval is created between the left eye image and the right eye image.

The control unit 130 controls an overall operation of the display apparatus 100 according to a user command received from the user interface unit 170 or a preset option.

Specifically, the control unit 130 controls the image receiving unit 140 and the image processing unit 150 to receive a 3D image, divide the 3D image into left and right eye images, and scale or interpolate each of the left and right eye images to a size enough to be displayed on a screen.

In addition, the control unit 130 may control the driving signal output unit 120 to generate a driving signal to open left eye glasses and right eye glasses of the 3D glasses 200 alternately in accordance with timings when a left eye image and a right eye image are displayed.

Furthermore, the control unit 130 may control the driving signal output unit 120 to generate a driving signal to additionally open left eye glasses and right eye glasses of the 3D glasses 200 regardless of timings when a left eye image and a right eye image are displayed, i.e., to additionally open the left eye glasses and the right eye glasses when the left eye image and the right eye image are not displayed.

Specifically, the control unit 130 may control to output a driving signal to additionally open left eye glasses of the 3D glasses 200 at an interval after a left eye image is output or before a left eye image is output and to additionally open right eye glasses of the 3D glasses 200 at an interval after a right eye image is output or before a right eye image is output.

Meanwhile, the control unit 130 may additionally open left eye glasses or right eye glasses of the 3D glasses 200 a predetermined number of times such that the 3D glasses 200 are operated in a frequency which is N times (where N is a natural number) of an external frequency.

For instance, suppose that an external frequency is 60 Hz in the case of fluorescent lamp and a frequency of a driving signal transmitted to the 3D glasses 200 is 100 Hz. In this case, the control unit 130 may additionally open left eye glasses or right eye glasses at an interval between a left eye image and a right eye image so that the 3D glasses 200 are operated an a driving frequency of 120 Hz.

That is, the control unit 130 may control the driving signal output unit 120 to additionally open left eye glasses of the 3D glasses 200 at two intervals from among intervals after three left eye images are output and additionally open right eye glasses of the 3D glasses 200 at two intervals from among intervals after three right eye images are output.

The storage unit 160 is a storage medium which stores various types of programs for operating the display apparatus 100 and may be realized as a memory, a hard disk drive (HDD), or the like. For example, the storage unit 160 may include a read only memory (ROM) which is to store a program for performing an operation of the control unit 130, a random access memory (RAM) which is to temporarily store data generated by performing the operation of the control unit 130, and so on. The storage unit 160 may further include an electrically erasable and programmable ROM (EEROM) which is to store various types of reference data, etc.

The user interface unit 170 transmits a user command, which is received from an input unit such as a remote controller, an input panel, or the like, to the control unit 130. In particular, the user interface unit 170 may receive a user command to change 2D/3D modes.

The driving signal output unit 120 may output a driving signal to open left eye glasses and right eye glasses of the 3D glasses 200 alternately.

Specifically, within a single vertical sync period, the driving signal output unit 120 generates a driving signal to open left eye glasses of the 3D glasses 200 in a left eye image display section or while a left eye image is output in a left eye image display section and to open right eye glasses of the 3D glasses 200 in a right eye image display section or while a right eye image is output in a right eye image display section and transmits the driving signal to the 3D glasses 200.

The above operation is performed to display a left eye image on the display unit 110 while left eye glasses of the 3D glasses 200 are opened and a right eye image on the display unit 110 while right eye glasses of the 3D glasses 200 are opened by opening and closing the 3D glasses 200 alternately. Herein, the driving signal may be transmitted in the form of infrared rays, though it is understood that another exemplary embodiment is not limited thereto. For example, according to another exemplary embodiment, the driving signal may be transmitted via a radio frequency communication, a ZigBee communication, a Bluetooth communication, or any other short range communication method.

In addition, the driving signal output unit 120 may output a driving signal to additionally open left eye glasses of the 3D glasses 200 at an interval after a left eye image is output or before a left eye image is output and to additionally open right eye glasses of the 3D glasses 200 at an interval after a right eye image is output or before a right eye image is output.

Accordingly, left eye glasses and right eye glasses of the 3D glasses 200 may be additionally opened regardless of display timings and thus, left eye glasses and right eye glasses may be opened simultaneously for a certain period of time.

Meanwhile, in the above exemplary embodiment, the driving signal output unit 120 may further include a first driving signal output unit (not shown) for generating a driving signal to control opening/closing of left eye glasses of the 3D glasses 200 and a second driving signal output unit (not shown) for generating a driving signal to control opening/closing of right eye glasses of the 3D glasses 200.

That is, the first driving signal output unit may output and transmit a left eye driving signal which combines a driving signal to open left eye glasses at a time when a left eye image is displayed with a driving signal to additionally open left eye glasses regardless of the display timing, and a right eye driving signal which combines a driving signal to open right eye glasses at a time when a right eye image is displayed with a driving signal to additionally open right eye glasses regardless of the display timing.

Meanwhile, the display apparatus 100 according to the present exemplary embodiment may be realized to display a 3D image or both a 2D image and a 3D image. Here, the display apparatus 100 may be realized as a 3D TV, though it is understood that another exemplary embodiment is not limited thereto. Therefore, the display apparatus 100 may be realized as any apparatus which can display a 3D image. For example, the display apparatus 100 may be a 3D monitor, a 3D image projector, or the like.

If the display apparatus 100 displays a 2D image, the 3D display apparatus 100 may use the same method as that used by an existing 2D display apparatus. If the display apparatus 100 displays a 3D image, the display apparatus 100 may receive a 3D image signal from a photographing apparatus, such as a camera or the like, or a 3D image signal which is captured by a camera and edited/processed and transmitted by a content provider (e.g., a broadcasting station), process the received 3D image signal, and display the processed 3D image on a screen. In particular, the display apparatus 100 may process left and right eye images, time-divide the processed left and right eye images, and alternately display the time-divided left and right eye images, with reference to a format of a 3D image. Moreover, according to another exemplary embodiment, the 3D image signal may be generated by the display apparatus 100 (e.g., from a 2D image signal), or may be converted by a content provider from a 2D image signal to a 3D image signal.

FIG. 4 is a block diagram illustrating a structure of 3D glasses according to an exemplary embodiment. Referring to FIG. 4, the 3D glasses 200 includes a receiving unit 210, a control unit 220, a driving unit 230, and a glasses unit 240.

The 3D glasses 200 may be realized as active type shutter glasses. A shutter glasses type refers to a display method which uses a binocular disparity to provide an image of a display apparatus and synchronize on and off of left and right eye glasses of 3D glasses so that a user recognizes an image observed at different angles with a perception of depth due to the way that the brain combines the observed images.

The shutter glasses type has a principle of synchronizing left and right eye image frames reproduced by the display apparatus 100 with shutters of the 3D glasses 200. In other words, left and right eye glasses of the 3D glasses 200 may be selectively opened and closed according to left and right image signals of the display apparatus 100 to generate a 3D image. A detailed structure of the 3D glasses 200 according to the present exemplary embodiment will now be explained.

The receiving unit 210 receives a driving signal from the display apparatus 100 and transmits the received driving signal to the control unit 220.

The control unit 220 controls an overall operation of the 3D glasses 200. In particular, the control unit 220 generates a control signal based on a driving signal received from the receiving unit 210 and transmits the generated control signal to the driving unit 230 to control the driving unit 230. In particular, the control unit 220 controls the driving unit 230 to generate a driving signal to drive the glasses unit 240.

The driving unit 230 generates a shutter driving signal based on the control signal received from the control unit 220. The driving unit 230 may be realized to pivot glasses of the glasses unit 240.

In particular, the glasses unit 240, which will be described later, includes a left eye shutter glass 242 and a right eye shutter glass 244. Therefore, a shutter driving unit 232 generates a left eye shutter driving signal which is to drive a shutter of the left eye shutter glass 242 and a right eye shutter driving signal which is to drive a shutter of the right eye shutter glass 244 and transmits the left eye shutter driving signal to the left eye shutter glass 242 and the right eye shutter driving signal to the right eye shutter glass 244.

The glasses unit 240 includes the left eye shutter glass 242 and the right eye shutter glass 244. The glasses unit 240 also opens and closes each of the glasses according to the left and right eye shutter driving signals received from the shutter driving unit 232.

Shutters of the left and right eye shutter glasses 242 and 244 may be realized by using liquid crystals. In other words, the glasses unit 240 may open and close the shutters by using liquid crystals of the left and right eye shutter glasses 242 and 244.

The 3D glasses 200 may include a power supply unit (not shown) to supply power to the 3D glasses 200. A power state of the power supply unit may be controlled by the control unit 220.

Meanwhile, in the above exemplary embodiment, a driving signal is transmitted to the 3D glasses 200 in the form of infrared rays by a driving signal output unit, but this is only an example. A driving signal output unit and the 3D glasses 200 may have their own communication units (not shown) and perform RF communication according to an RF communication protocol.

For example, the communication unit (not shown) may include a Bluetooth communication module or a ZigBee communication module to communicate with other communication units according to a Bluetooth communication protocol or a ZigBee communication protocol.

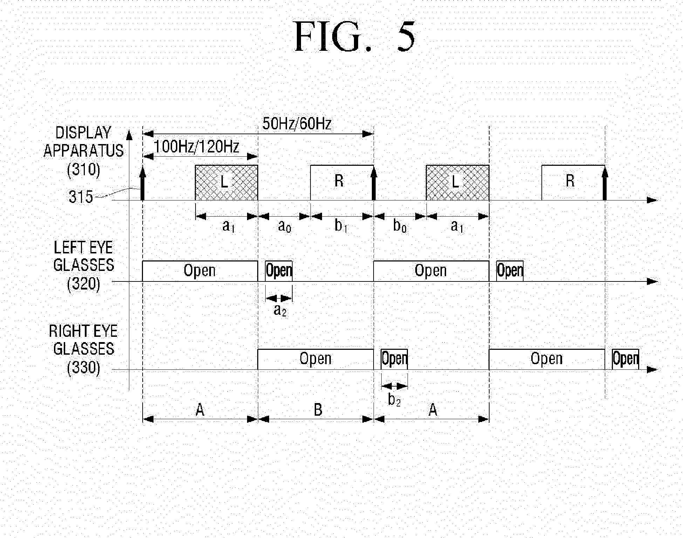

FIG. 5 illustrates timing diagrams 310, 320, and 330 to explain an operation of 3D glasses according to an image output from a display apparatus according to an exemplary embodiment.

In FIG. 5, the timing diagram 310 at the top represents a timing when a left eye image and a right eye image are displayed on a display apparatus, the timing diagram 320 in the middle represents a timing when left eye glasses of 3D glasses are opened, and the timing diagram 330 at the bottom represents a timing when right eye glasses of 3D glasses are opened.

As illustrated in FIG. 5, it is assumed that 3D glasses according to an exemplary embodiment operate at a driving frequency of 100 Hz or 120 Hz according to a vertical sync signal 315.

A display apparatus outputs a left eye image a1 and a right eye image b1 alternately at predetermined intervals within a single vertical sync signal (A+B) (310). Accordingly, the left eye image a1 is output in part of a left eye image display section (A) and the right eye image b1 is output in part of a right eye image display section (B).

Subsequently, a display apparatus generates a driving signal to open left eye glasses and right eye glasses of 3D glasses alternately within a vertical sync period, and transmits the driving signal to the 3D glasses. Accordingly, the left eye glasses are opened in the left eye image display section (A) (320) and the right eye glasses are opened in the right eye image display section (B) (330). Therefore, as the left eye and right eye glasses of 3D glasses are opened respectively in accordance with the timings of displaying left eye and right eye images on a display apparatus, a user may view a 3D image.

Meanwhile, a display apparatus may output a driving signal to additionally open the left eye and right eye glasses of the 3D glasses. Specifically, a display apparatus outputs a driving signal to additionally open left eye glasses at intervals after a left eye image is output and to additionally open right eye glasses at intervals after a right eye image is output.

Accordingly, the left eye glasses are additionally opened at an interval a0 after a left eye image is output (a2 of 320) and the right eye glasses are additionally opened at an interval b0 after a right eye image is output (b2 of 330).

In this case, as illustrated in FIG. 5, the left eye glasses are opened in the right eye image display section (B) while a right eye image is not displayed, and the right eye glasses are opened in the left eye image display section (A) while a left eye image is not displayed. Therefore, there is a section where both left eye and right eye glasses of 3D glasses are opened simultaneously.

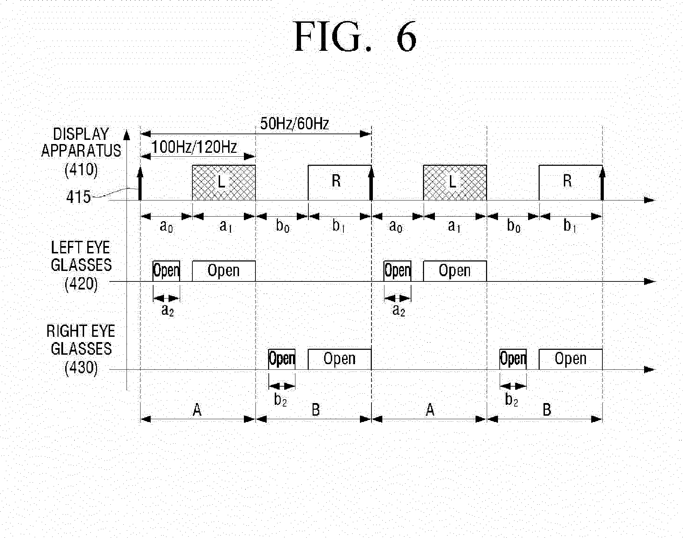

FIG. 6 illustrates timing diagrams to explain an operation of 3D glasses according to an image output from a display apparatus according to another exemplary embodiment.

In FIG. 6, the timing diagram 410 at the top represents a timing when a left eye image and a right eye image are displayed on a display apparatus, the timing diagram 420 in the middle represents a timing when left eye glasses of 3D glasses are opened, and the timing diagram 430 at the bottom represents a timing when right eye glasses of 3D glasses are opened.

In FIG. 6, it is also assumed that 3D glasses according to an exemplary embodiment operate at a driving frequency of 100 Hz or 120 Hz according to a vertical sync signal 415.

The timings of opening left eye glasses and right eye glasses in FIG. 6 are different from those in FIG. 5.

Specifically, a display apparatus generates a driving signal to open left eye glasses while a left eye image is output and to open right eye glasses while a right eye image is output in a vertical sync period and transmits the driving signal to 3D glasses. Accordingly, the left eye glasses are opened while a left eye image is output (a1) in the left eye image display section (A) (420) and the right eye glasses are opened while a right eye image is output (b1) in the right eye image display section (B) (430). Therefore, a user may view a 3D image.

In this case, a display apparatus outputs a driving signal to additionally open left eye and right eye glasses at intervals before left eye and right eye images are output. That is, left eye glasses and right eye glasses are additionally opened at intervals before a left eye image is output in a left eye image display section and before a right eye image is output in a right eye image display section, respectively.

Accordingly, the left eye glasses are additionally opened at an interval a0 before a left eye image is output (a2 of 420) in the left eye image display section (A) and the right eye glasses are additionally opened at an interval b0 before a right eye image is output (b2 of 430) in the right eye image display section (B). Therefore, there is no section where left eye glasses and right eye glasses of 3D glasses are opened simultaneously.

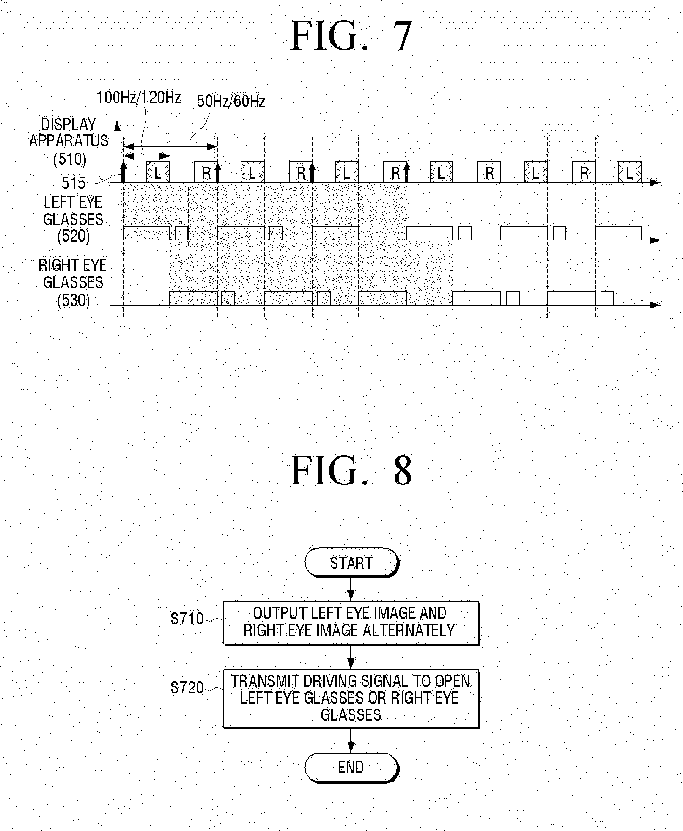

FIG. 7 illustrates timing diagrams to explain an operation of 3D glasses according to an image output from a display apparatus according to another exemplary embodiment.

In FIG. 7, the timing diagram 510 at the top represents a timing when a left eye image and a right eye image are displayed on a display apparatus, the timing diagram 520 in the middle represents a timing when left eye glasses of 3D glasses are opened, and the timing diagram 530 at the bottom represents a timing when right eye glasses of 3D glasses are opened.

In FIG. 7, it is assumed that 3D glasses according to an exemplary embodiment operate at a driving frequency of 120 Hz according to a vertical sync signal 515.

The exemplary embodiment illustrated in FIG. 7 is different from that illustrated in FIG. 5 in that left eye glasses and right eye glasses are additionally opened in consideration of an external frequency in the exemplary embodiment illustrated in FIG. 7.

As described above, a display apparatus according to an exemplary embodiment may additionally open left eye glasses or right eye glasses of 3D glasses as many as a predetermined number of times so that the 3D glasses operate at a frequency which is N times of an external frequency (where N is a natural number).

As illustrated in FIG. 7, if an external frequency is 50 Hz and a frequency of a driving signal transmitted to the 3D glasses 200 is 120 Hz, a display apparatus may control to operate 3D glasses at a frequency which is N times of an external frequency (where N is a natural number) by adjusting the number of times that left eye and right eye glasses are additionally opened.

That is, a display apparatus may output a driving signal to additionally open left eye glasses at two intervals from among intervals after three left eye images are output (operation 520) and to additionally open right eye glasses at two intervals from among intervals after three right eye images are output and accordingly, control an operation of 3D glasses.

Meanwhile, in the above exemplary embodiments, glasses of 3D glasses are opened/closed in accordance with display timings of left eye and right eye images, and the glasses of 3D glasses are opened/closed in other sections regardless of the display timings, but this is only an example. That is, according to one or more other exemplary embodiments, the glasses which are opened in accordance with the display timing of an image may still be opened in other sections.

In FIG. 5, the left eye glasses which are opened in the left eye image display section (A of 320) are closed and are additionally opened at an interval after a left eye image is output. However, a display apparatus may output a driving signal which does not close the left eye glasses which are opened in the left eye image display section (A of 320) and keeps the left eye glasses opened until an interval after a left eye image is output. Likewise, a display apparatus may output a driving signal which does not close the right eye glasses which are opened in the right eye image display section (B of 320) and keeps the right eye glasses opened until an interval after a right eye image is output.

FIG. 8 is a flowchart to explain a method for displaying a 3D image according to an exemplary embodiment.

A left eye image and a right eye image are output alternately (operation S810). That is, a left eye image and a right eye image may be output alternately at predetermined intervals within a single vertical sync period.

Herein, the vertical sync period includes a left eye image display section and a right eye image display section. A left eye image and a right eye image are displayed in at least part of the left eye image display section and at least part of the right eye image display section, respectively, creating intervals between left eye images and right eye images.

Subsequently, a driving signal to open/close left eye glasses and right eye glasses is transmitted to 3D glasses (operation S820).

Specifically, a driving signal to additionally open left eye glasses or right eye glasses within intervals while opening the left eye glasses and the right glasses of 3D glasses within a single vertical sync period may be transmitted to the 3D glasses.

Herein, the driving signal may open left eye glasses in a left eye image display section and open right eye glasses in a right eye image display section, and additionally open the left eye glasses at intervals after a left eye image is output and additionally open the right eye glasses at intervals after a right eye image is output.

On the other hand, the driving signal may open left eye glasses while a left eye image is output in the left eye image display section and open right eye glasses while a right eye image is output in the right eye image display section. In this case, the left eye glasses may be additionally opened at intervals before a left eye image is output in the left eye image display section and the right eye glasses may be additionally opened at intervals before a right eye image is output.

Meanwhile, the driving signal may additionally open left eye glasses or right eye glasses as many as a predetermined number of times so that 3D glasses may be operated at frequency which is N times an external frequency (where N is a natural number).

The above method may be realized by a display apparatus according to an exemplary embodiment, and may also be realized by other display apparatuses which do not have all and every components of the display apparatus according to one or more other exemplary embodiments. Moreover, it is understood that the above method may be realized by an image processing apparatus (e.g., a set-top box, a Blu-ray player, etc.) which does not include a display unit, but outputs a 3D image signal. Furthermore, it is understood that the above method may be realized by an apparatus that outputs a driving signal to open/close left eye glasses and right eye glasses but does not include a display unit.

While the above-exemplary embodiments relate to additionally opening left eye glasses and right eye glasses during intervals when no image is displayed on a screen, it is understood that one or more exemplary embodiments are not limited thereto. For example, according to another exemplary embodiment, the additional or continuous opening of the left eye glasses may be during a period when a left eye image is displayed, and the additional or continuous opening of the right eye glasses may be during a period when a right eye image is displayed

(e.g., the left eye image display section in FIG. 6 is extended to overlap with a2 and the right eye image display section in FIG. 6 is extended to overlap with b2).

Meanwhile, according to an exemplary embodiment, a storage medium which stores a program for performing a 3D glasses driving method may be included.

Herein, the driving method includes opening left eye glasses and right eye glasses of 3D glasses alternately and additionally opening the left eye glasses and the right eye glasses at intervals within a single vertical sync period where a left eye image and a right eye image are output alternately at predetermined intervals.

In this case, the vertical sync period includes a left eye image display section and a right eye image display section, and each of the left eye image and the right eye image is displayed in at least part of the left eye image display section and at least part of the right eye image display section, creating intervals between left eye images and right eye images.

In this case, left eye glasses may be opened in the left eye image display section and additionally opened at intervals after a left eye image is output, and right eye glasses may be opened in the right eye image display section and additionally opened at intervals after a right eye image is output.

Meanwhile, the left eye glasses may first be opened at intervals before a left eye image is output in the left eye image display section and be opened while a left eye image is output in the left eye image display section.

In this case, the right eye glasses may first be opened at intervals before a right eye image is output in the right eye image display section and be opened while a left eye image is output in the right eye image display section.

Meanwhile, 3D glasses may be operated at a frequency which is N times an external frequency (where N is a natural number).

A computer readable recording medium storing a program for executing such a 3D glasses driving method includes all types of recording devices which store data which can be read by a computer system. Examples of the computer readable recording medium include a ROM, a RAM, a CD-ROM, a magnetic tape, a floppy disk, an optical data storage device, etc. The computer readable recording medium can also be distributed over network coupled with computer systems so that a computer readable code is stored and executed in a distributed fashion.

The 3D glasses driving method may be realized by the above-described 3D display method.

Although a few exemplary embodiments have been shown and described, it would be appreciated by those skilled in the art that changes may be made in these exemplary embodiments without departing from the principles and spirit of the inventive concept, the scope of which is defined in the claims and their equivalents.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus (100), comprising:
a display unit (110) which is arranged to alternately output a left eye image and a right eye image at predetermined intervals;
a driving signal output unit (120) which is arranged to output a driving signal to alternately open left eye glasses and right eye glasses of three-dimensional (3D) glasses (200) within a single vertical sync section; and
a control unit (130) which is arranged to control the driving signal output unit (120) to additionally open the left eye glasses or the right eye glasses within the predetermined intervals.

2. The apparatus as claimed in claim 1, wherein:
the vertical sync section includes a left eye image display section and a right eye image display section; and
the left eye image and the right eye image are respectively displayed in part of the left eye image display section and part of the right eye image display section having the predetermined intervals.

3. The apparatus as claimed in claim 2, wherein:
the driving signal output unit (120) is arranged to output a driving signal to open the left eye glasses in the left eye image display section and to open the right eye glasses in the right eye image display section; and
the control unit (130) is arranged to control the driving signal output unit to additionally open the left eye glasses at intervals after the left eye image is output and to additionally open the right eye glasses at intervals after the right eye image is output.

4. The apparatus as claimed in claim 2 or claim 3, wherein:
the driving signal output unit (120) outputs a driving signal to open the left eye glasses while the left eye image is output in the left eye image display section and to open the right eye glasses while the right eye image is output in the right eye image display section; and
the control unit (130) is arranged to control the driving signal output unit (120) to additionally open the left eye glasses at intervals before the left eye image is output in the left eye image display section and to additionally open the right eye glasses at intervals before the right eye image is output in the right eye image display section.

5. The apparatus as claimed in any one of claims 1 to 4, wherein the control unit (130) is arranged additionally to open the left eye glasses and the right eye glasses a predetermined number of times so that the 3D glasses are operated at a frequency which is N times an external frequency, where N is a natural number.

6. A 3D display method in a display apparatus, the method comprising:
alternately outputting a left eye image and a right eye image at predetermined intervals (S710); and
transmitting, to the 3D glasses, a driving signal to open alternately left eye glasses and right eye glasses of 3D glasses within a single vertical sync section and to additionally open the left eye glasses or the right eye glasses within the predetermined intervals (S720).

7. The method as claimed in claim 6, wherein:
the vertical sync section includes a left eye image display section and a right eye image display section; and
the left eye image and the right eye image are respectively displayed in part of the left eye image display section and part of the right eye image display section having the predetermined intervals.

8. The method as claimed in claim 7, wherein the driving signal is a driving signal to open the left eye glasses in the left eye image display section and to open the right eye glasses in the right eye image display section, and to additionally open the left eye glasses at intervals after the left eye image is output and to additionally open the right eye glasses at intervals after the right eye image is output.

9. The method as claimed in claim 7 or claim 8, wherein the driving signal is a driving signal to open the left eye glasses while the left eye image is output in the left eye image display section and to open the right eye glasses while the right eye image is output in the right eye image display section, and to additionally open the left eye glasses at intervals before the left eye image is output in the left eye image display section and to additionally open the right eye glasses at intervals before the right eye image is output in the right eye image display section.

10. The method as claimed in any one of claims 6 to 9, wherein the driving signal is a driving signal to additionally open the left eye glasses and the right eye glasses a predetermined number of times so that the 3D glasses are operated at a frequency which is N times an external frequency, where N is a natural number.

11. A 3D glasses driving method, the method including: alternately opening left eye glasses and right eye glasses of 3D glasses within a vertical sync period where a left eye image and a right eye image are alternately output at predetermined intervals; and additionally opening at least one of the left eye glasses and the right eye glasses within the intervals

12. The method of claim 11, wherein the vertical sync period may include a left eye image display section and a right eye image display section, and the left eye image and the right eye image may be respectively displayed in part of the left eye image display section and the right eye image display section having the intervals.

13. The method of claim 12, wherein the left eye glasses may be opened in the left eye image display section and additionally opened at intervals after the left eye image is output, and the right eye glasses may be opened in the right eye image display section and additionally opened at intervals after the right eye image is output.

14. The method of claim 12 or claim 13, wherein the left eye glasses may be opened at intervals before the left eye image is output and may be opened while the left eye image is output in the left eye image display section, and the right eye glasses may be opened at intervals before the right eye image is output and may be opened while the left eye image is output in the right eye image display section

15. The method of any one of claims 11 to 14, wherein the 3D glasses may be operated at a frequency which is N times an external frequency (where N is a natural number).
